# EUROPÄISCHE PATENTANMELDUNG

(11) **EP 2 282 182 A1**
(43) Veröffentlichungstag der Anmeldung: **09.02.2011**
(21) Anmeldenummer: 09010262.5
(22) Anmeldetag: 08.08.2009
(51) Int. Cl.: G01F 23/00, G01F 25/00

(54) **Verfahren zum Erstellen einer Peiltabelle für einen Tank**

(71) Anmelder: Scheidt & Bachmann GmbH, D-41238 Mönchengladbach (DE)
(72) Erfinder: Miller, Norbert, 41063 Mönchengladbach (DE); Clever, Frank, 52538 Selfkant (DE)
(74) Vertreter: Stenger, Watzke & Ring

(57) **Zusammenfassung**

Die vorliegende Erfindung betrifft ein Verfahren zum Erstellen einer Peiltabelle für einen Tank, insbesondere einen Treibstofftank. Weiterhin betrifft die Erfindung ein Verfahren zum Ermitteln einer Menge eines in einem Tank vorhandenen Fluids.

Der Erfindung liegt deshalb die **Aufgabe** zugrunde, die Genauigkeit einer Peiltabelle zu verbessern und eine einfache Möglichkeit für die Erstellung einer tankspezifischen Peiltabelle anzugeben.

Als **Lösung** wird mit der Erfindung ein Verfahren zum Erstellen einer Peiltabelle für einen Tank, insbesondere einen Treibstofftank, vorgeschlagen, mit folgenden Schritten: Auswählen einer Peiltabelle aus einer Vielzahl von vorhandenen Peiltabellen auf Basis eines vorgebbaren Auswahlkriteriums, Anpassen der ausgewählten Peiltabelle an den Tank, wobei ein Wert der Peiltabelle durch einen gemessenen Wert des Tank ersetzt wird.

## Beschreibung

Die vorliegende Erfindung betrifft ein Verfahren zum Erstellen einer Peiltabelle für einen Tank, insbesondere einen Treibstofftank. Weiterhin betrifft die Erfindung ein Verfahren zum Ermitteln einer Menge eines in einem Tank vorhandenen Fluids.

Gattungsgemäße Tanks werden im Stand der Technik als Treibstofftank, auch Kraftstofftank genannt, eingesetzt. Üblicherweise wird eine Information darüber benötigt, wieviel Kraftstoff sich im Tank befindet. Diese Angabe dient als Information über die Verfügbarkeit von Kraftstoff. Ferner dient die Information dazu, zu ermitteln, wieviel Kraftstoff dem Tank hinzugefügt werden kann.

Um eine Information über die Menge des Kraftstoffs im Tank zu erhalten, ist es im Stand der Technik üblich, den Tank mit einem Pegel zu versehen, der den Pegelstand des im vorhandenen Kraftstoffs Tank erfasst. Anhand einer Peiltabelle kann dem Pegelstand eine im Tank vorhandene Menge an Kraftstoff zugeordnet werden.

Eine Peiltabelle wird zum Beispiel seitens des Tankherstellers mitgeliefert. Die herstellerseitig mitgelieferte Peiltabelle ist in der Regel jedoch nur dann mit hinreichender Genauigkeit anwendbar, wenn vorgegebene Parameter genau eingehalten sind, insbesondere eine genau vorgegebene Einbaulage des Tanks. Sobald einer oder mehrere dieser Parameter von den Vorgaben bezüglich der Peiltabelle abweicht, weicht auch die Peiltabelle von der tatsächlichen Zuordnung zwischen Pegelstand und Menge des im Tank vorhandenen Kraftstoffs erheblich ab.

Peiltabellen können aber auch nachträglich für einen eingebauten Tank erstellt werden. Verfahren zur Erstellung einer Peiltabelle eines eingebauten Tanks sind beispielsweise aus der WO 96/38717 A1, der US 6,597,998 sowie der US 5,665,895 bekannt. Gemeinsam ist diesen Verfahren, dass eine Peiltabelle mittels Tankvermessung für den Kraftstofftank erstellt wird. Hierzu wird die Zuführung beziehungsweise Entnahme von Kraftstoff in Bezug auf den Pegelstand erfasst und unter Berücksichtigung mathematischer Methoden zu einer Peiltabelle verdichtet. Diese Verfahren erweisen sich im praktischen Gebrauch sowohl hinsichtlich des Zeitaufwands als auch hinsichtlich des Materialeinsatzes als außerordentlich aufwändig, weil der Tank zum Erstellen einer hinreichend genauen vollständigen Peiltabelle wenigstens einmal vollständig gefüllt und entleert werden muss. Veränderungen tankbezogener Eigenschaften werden nicht berücksichtigt.

Der Erfindung liegt deshalb die **Aufgabe** zugrunde, eine möglichst genaue Peiltabelle zu erstellen.

Als **Lösung** wird mit der Erfindung ein Verfahren zum Erstellen einer Peiltabelle für einen Tank, insbesondere einen Treibstofftank, vorgeschlagen, mit folgenden Schritten: Auswählen einer Peiltabelle aus einer Vielzahl von vorhandenen Peiltabellen auf Basis eines vorgebbaren Auswahlkriteriums, Anpassen der ausgewählten Peiltabelle an den Tank, wobei ein Wert der Peiltabelle durch einen gemessenen Wert des Tanks ersetzt wird.

Unter Peiltabelle im Sinne dieser Erfindung soll nicht nur eine tabellenartige Zuordnung des Pegelstands im Tank zu der Menge des im Tank angeordneten Fluids in Form einer Gegenüberstellung von diskreten Pegelständen und Volumenangaben verstanden werden, sondern auch eine Zuordnung in Form eines in einem Diagramm dargestellten Graphen, einer mathematischen Formel, beispielsweise eine Funktion, oder dergleichen, wobei der Begriff Peiltabelle im Allgemeinen eine Zuordnung meint, bei der einem Pegelstand eines im Tank vorhandenen Fluids eine entsprechende Menge des im Tank angeordneten Fluids vorzugsweise in Form einer Volumenangabe zugeordnet wird.

Tank im Sinne der Erfindung ist jeder Hohlkörper, der zur Aufnahme eines Fluids, insbesondere einer Flüssigkeit geeignet ist. Das im Tank gespeicherte Fluid kann zum Beispiel ein Kraftstoff wie Benzin, Flüssiggas, Diesel, Autogas oder dergleichen sein. Es kann darüber hinaus aber auch jeder andere fluide, insbesondere flüssige Stoff sein, beispielsweise Wasser, Alkohol, Säuren oder dergleichen.

Die Erfindung ermöglicht es, auf einfache und schnelle Weise zielgenau eine tankspezifische genaue Peiltabelle zu erstellen. Als vorteilhaft erweist sich insbesondere die Kombination der Genauigkeit einer nach der Erfindung erstellten Peiltabelle mit einem geringen hierfür erforderlichen Zeitaufwand. Die erreichbare Genauigkeit ermöglicht es, sogar unplanmäßiges Ändern des Pegelstands des Tanks zu erfassen, so dass zum Beispiel Leckagen, unberechtigte Entnahmen Dritter oder dergleichen erfasst werden können. Weiterhin können beispielsweise Parameter wie die Aufstellungsbedingungen des Tanks, eine Tankform oder dergleichen berücksichtigt werden. Aber auch weitere Parameter wie die Temperatur, der Druck im Tank oder dergleichen können bei der Erstelllung der Peiltabelle berücksichtigt werden, um die Genauigkeit der Peiltabelle weiter zu erhöhen. Sogar eine Änderung des Temperaturkoeffizienten des Fluids im Tank kann in die Erstellung der Peiltabelle gemäß dem Verfahren der Erfindung einfließen. Es lassen sich auch äußere Einflüsse wie Änderung der physikalischen Eigenschaften des Fluids oder dergleichen berücksichtigen. Das Erstellen der Peiltabelle kann auch ein Kalibrieren der Peiltabelle umfassen. Die Erfindung erlaubt es somit, eine tankspezifische, individuelle Peiltabelle zu erstellen. Dabei wird die Peiltabelle durch den bestimmungsgemäßen Betrieb des Tanks mit der Zeit immer genauer. Die Peiltabelle kann ständig aktualisiert gehalten werden. Sie ist individualisiert für den Tank und die vorgegebenen Parameter, für den sie erstellt wird. Bei einer linearen Zuordnung zwischen Pegelstand und Volumen können auch lediglich relative Änderungen des Volumens in Bezug auf relative Änderungen der Pegelstände verwendet werden. Durch die relative Messwerterfassung können auch Mängel bei der Installation der Pegelerfassungseinheit kompensiert werden, beispielsweise wenn die Pegelerfassungseinheit geneigt oder mit einem Höhenoffset installiert wird.

Zur Durchführung des Verfahrens wird eine Vielzahl von vorhandenen Peiltabellen bereitgestellt, das heißt, Peiltabellen, die beispielsweise für bestimmte Tankformen, Tankgrößen oder dergleichen vorzugsweise in Form einer Bibliothek von Peiltabellen bereitgestellt werden können. Solche Peiltabellen können zum Beispiel Peiltabellen anderer bekannter Tanks und/oder für unterschiedliche Aufstellungsbedingungen der Tanks, wie horizontale oder vertikale Ausrichtung einer Tankachse oder dergleichen, sein. Die vorhandene Peiltabelle kann auch eine manuell oder mittels einer Recheneinrichtung automatisch anhand von geometrischen Abmessungen des Tanks erstellte Peiltabelle sein, die zum Beispiel eine ungefähre Zuordnung des Pegelstands zu im Tank vorhandenen Fluid erlaubt. Diese vorhandenen, das heißt, bekannten Peiltabellen werden der Auswahl zugrundegelegt.

Die Auswahl erfolgt auf Basis eines vorgebbaren Auswahlkriteriums. Das Auswahlkriterium kann durch einen Nutzer, aber auch, insbesondere bei automatischer Auswahl, durch eine Steuereinrichtung, eine Rechnereinrichtung oder dergleichen festgelegt werden. Das Auswahlkriterium kann jedes Kriterium sein, welches geeignet ist, anhand wenigstens eines vorgebbaren Parameters und/oder Messwertes aus den vorhandenen Peiltabellen eine gezielt auszuwählen. Das Auswahlkriterium kann beispielsweise durch eine Tankform, einer oder mehrerer Abmessungen des Tanks, ein Tankvolumen, eine Einbaulage und/oder dergleichen gebildet sein.

Insbesondere kann das Auswahlkriterium eine Korrelation von durch pegelbezogenen Volumenänderungen des Fluids im Tank zu den vorhandenen Peiltabellen gebildet sein. Eine pegelbezogene Volumenänderung ist vorzugsweise durch einen Anfangs- und Endpegelstand sowie eine zugehörige Volumenänderung gebildet. Natürlich können auch mehrere unterschiedliche Eigenschaften das Auswahlkriterium gemeinsam bilden. Aus der Vielzahl von vorhandenen Peiltabellen wird anhand des Auswahlkriteriums vorzugsweise die Peiltabelle ausgewählt, die dem Auswahlkriterium am nächsten kommt. Das kann die Peiltabelle sein, bei der die Abweichung zum vorgegebenen Auswahlkriterium am geringsten ist. Die Auswahl kann mittels der Steuereinrichtung oder der Rechnereinrichtung automatisch durchgeführt werden. Insbesondere bei der Durchführung einer maschinellen automatischen Auswahl mittels der Steuerung oder der Rechnereinrichtung können die vorhandenen Peiltabellen vorzugsweise in gespeicherter Form bereitgestellt werden.

Als Auswahlkriterium kann die geringste Abweichung eines Messwerts einer physikalischen Größe des Tanks von dem entsprechenden Wert der vorhandenen Peiltabellen dienen. Der Messwert kann beispielsweise ein Durchmesser des Tanks, eine Länge des Tanks, eine Querschnittsform des Tanks, eine geometrische Form des Tanks oder dergleichen gebildet sein. Natürlich kann der Messwert auch durch den gemessenen Wert des Tanks oder mehrere gemessene Werte des Tanks gebildet sein. Gegebenenfalls kann der Messwert der physikalischen Größe des Tanks mittels Umrechnung an den entsprechenden Wert der vorhandenen Peiltabellen angepasst werden. Dies ist unter anderem dann vorteilhaft, wenn unterschiedliche Arten von Peiltabellen zur Auswahl stehen, so beispielsweise Peiltabelle in reiner Tabellenform, Peiltabellen in Form eines in einem Diagramm dargestellten Graphens oder auch Peiltabellen in Form einer mathematischen Formel. Je nach Art der Peiltabelle kann eine entsprechende Umrechnung des Messwerts vorgesehen sein. Dies ermöglicht es, eine Vergleichbarkeit der unterschiedlichen Arten von Peiltabellen zu ermöglichen, so dass ein einheitliches Auswahlkriterium für die beste Peiltabelle vorgegeben werden kann, das heißt, die Peiltabelle, die der tatsächlichen Zuordnung zwischen Pegelstand und Menge des im Tank vorhandenen Fluids am nächsten kommt. Dies kann bedeuten, dass die ausgewählte Peiltabelle in einem interessierenden Bereich die geringste Abweichung von den tatsächlichen Verhältnissen des Tanks hat. Natürlich kann auch vorgesehen sein, dass die Peiltabelle ausgewählt wird, die über den gesamten Bereich den tatsächlichen Verhältnissen des Tanks am nächsten liegt, das heißt, die insgesamt die geringste Abweichung über den gesamten Bereich aufweist.

Das Auswählen der Peiltabelle erfolgt durch Vergleichen der vorhandenen Peiltabellen auf Basis des vorgebbaren Auswahlkriteriums. Das Vergleichen kann umfassen, dass die geringste Abweichung bezüglich des Auswahlkriteriums zur Auswahl der Peiltabelle führt.

Das Anpassen der ausgewählten Peiltabelle an den Tank ermöglicht es, die ausgewählte Peiltabelle, die in der Regel die Tankeigenschaften nur ungefähr erfasst, beispielsweise weil sie für den Tank oder dessen Einbaulage nicht geeignet ist, so anzupassen, dass die Genauigkeit der Zuordnung eines Pegelstands zu einer im Tank vorhandenen Fluidmenge verbessert wird. Das Anpassen selbst kann durch einen einzelnen Anpassungsschritt aber auch durch mehrere, aufeinanderfolgende, iterative Schritte erfolgen, bei denen die Peiltabelle sukzessive an die tatsächlichen durch den Tank gegebenen Bedingungen angepasst werden kann. Auf diese Weise lässt sich ausgehend von der ausgewählten Peiltabelle eine hochgenaue Peiltabelle erzeugen, die es erlaubt, unberechtigte Entnahmen von Fluid oder Zuführen von Fremdstoffen zu erkennen. Darüber hinaus ermöglicht es diese Peiltabelle, bereits geringfügige Leckagen zu ermitteln, um gegebenenfalls Gegenmaßnahmen einleiten zu können.

Der Schritt des Anpassens selbst umfasst, dass ein Wert der Peiltabelle durch einen gemessenen Wert des Tanks ersetzt wird. Der gemessene Wert oder auch Messwert des

Tanks wird mit Hilfe einer Messeinrichtung ermittelt. Der Messwert kann beispielsweise eine oder mehrere Abmessungen des Tanks umfassen, er kann aber auch eine das im Tank speicherbare Fluid bestimmende Abmessung, zum Beispiel das Volumen des Tanks, umfassen. Natürlich kann der Messwert auch durch Kombinationen von unterschiedlichen einzelnen gemessenen Werten gebildet sein, beispielsweise einen Anfangspegelstand, einen Endpegelstand sowie eine gemessene Volumendifferenz. Je nach Art der Peiltabelle kann zusätzlich eine Umrechnung vorgesehen sein, die es erlaubt, den gemessenen Wert an eine Art der Angabe des Werts der Peiltabelle so anzupassen, dass dieser ersetzt werden kann. Dies ist vor allem bei Peiltabellen in Form von in einem Diagramm dargestellten Graphen oder auch in Form von einer mathematischen Formel zweckmäßig.

Natürlich können zur Anpassung der ausgewählten Peiltabelle an den Tank auch mehr als ein gemessener Wert des Tanks verwendet werden. Vorzugsweise wird eine Vielzahl von gemessenen Werten des Tanks verwendet, die besonders bevorzugt über den gesamten Bereich der möglichen Pegelstände verteilt liegen. Dies ermöglicht es, die Peiltabelle nicht nur punktuell sondern möglichst über einen großen, vorzugsweise über den gesamten Bereich der Peiltabelle anzupassen.

Der Messwert kann auch für das Auswahlkriterium zur Auswahl einer Peiltabelle aus den vorhandenen Peiltabellen dienen.

Der Schritt des Ersetzens des Wertes der Peiltabelle kann ein Umrechnen des gemessenen Werts umfassen. Dies ist beispielsweise dann zweckmäßig, wenn der Messwert in einen Graphen einer in einem Diagramm dargestellten Peiltabelle oder auch in eine Formel von einer durch eine Formel definierten Peiltabelle erforderlich ist.

Das Verfahren erlaubt es somit, anhand von wenigen Schritten und insbesondere automatisiert eine Peiltabelle mit hoher Genauigkeit in kurzer Zeit zu erstellen, so dass eine zuverlässige Nutzung des Tanks erreicht werden kann. Probleme im Zusammenhang mit einem leerlaufenden Tank beziehungsweise einem überfüllten Tank können weitgehend vermieden werden. Dies betrifft unter anderem weitere, mit dem Tank verbundene Einrichtungen, wie Pumpen, Filter oder dergleichen, die oftmals für ihre bestimmungsgemäße Funktion ständig mit Fluid befüllt sein sollen. Wird beispielsweise eine sehr geringe Menge an Fluid im Tank erfasst, kann vorgesehen sein, dass der Betrieb von Pumpen oder dergleichen zwecks Vermeidung von Beschädigungen eingestellt wird. Die Entnahme von Fluid aus dem Tank wird somit vermieden, so dass ein schädliches Trockenlaufen der Pumpen verhindert werden kann. Gleiches gilt natürlich auch für das Befüllen des Tanks durch Zuführen von Fluid, wobei es anhand der nach dem erfindungsgemäßen Verfahren erstellten Peiltabelle möglich ist, die Zufuhr von Fluid zu dem Tank rechtzeitig zu beenden, bevor der Tank überläuft und gegebenenfalls schädlich wirkendes Fluid austritt. Dies erlaubt es, die Sicherheit eines Systems mit einem Tank weiter zu verbessern. Insgesamt kann eine genaue tankspezifische Peiltabelle erreicht werden, ohne dass der Tank aufwändig vermessen werden muss, beispielsweise indem der Tank zu Messzwecken vom vollständig entleerten Zustand in den vollständig gefüllten Zustand gebracht wird, wobei in definierter Weise ein Fluid zugeführt wird und zugleich der Pegelstand auf die zugeführte Fluidmenge bezogen erfasst wird. Gerade bei großen Tanks ist dieses Verfahren der Erstellung einer tankspezifischen Peiltabelle sehr zeitaufwändig und umständlich. Gerade bei großen Tanks, die oftmals individuell nach Kundenwünschen angefertigt werden, kann somit durch die Erfindung eine einfache Möglichkeit geschaffen werden, bei geringem Zeitaufwand und unter geringem Materialaufwand eine genaue Peiltabelle erstellen zu können. Gerade die Kombination der Auswahl einer Peiltabelle aus einer Vielzahl von vorhandenen Peiltabellen in Verbindung mit dem Anpassen, erlaubt es, schnell und zuverlässig eine hoch genaue Peiltabelle insbesondere für individuelle Tanks und unterschiedlichste Aufstellungen der Tanks zu erreichen.

Die Erfindung kann bei Tanks in vielfältigen Anwendungen eingesetzt werden, beispielsweise um eine Flüssigkeit wie Wasser, Kraftstoff, insbesondere Benzin, Flüssiggas oder dergleichen zu speichern. Zu diesem Zweck wird das Fluid in einem Hohlraum des Tanks eingebracht und bedarfsweise wieder entnommen. Der Hohlraum des Tanks ist in der Regel durch eine Wand umschlossen, die eine Öffnung aufweist, durch die das Fluid dem Tank zugeführt beziehungsweise entnommen werden kann. Der Tank ist für seine Anwendung derart ausgebildet, dass das in ihm angeordnete Fluid vorzugsweise weitgehend verlustlos und in der Regel ohne gravierende Veränderungen seiner physikalischen und chemischen Eigenschaften gelagert werden kann. Der Tank kann somit als Speicher für das Fluid dienen. Der Tank kann als Drucktank sowohl für Über- als auch für Unterdruck ausgebildet sein. Vorzugsweise ist er im Wesentlichen hermetisch abgeriegelt, so dass von dem gespeicherten Fluid im Wesentlichen nichts entweicht, aber auch von außen nichts in den Tank eindringen kann, was das Fluid verunreinigen könnte.

Ein solcher Tank kann stationär aufgestellt sein, beispielsweise im Bereich einer Tankstelle für Kraftstoffe oder dergleichen, er kann aber auch als Unterbodentank unterirdisch, beispielsweise im Erdreich angeordnet sein. Darüber hinaus kann der Tank auch mit einem Fahrzeug verbunden sein, mit dem das Fluid in gewünschter Weise transportiert werden kann. Transportfahrzeuge können beispielsweise Lastkraftwagen, Güterwaggons oder Transportschiffe sein.

Es kann ferner vorgesehen sein, dass der dem Messwert entsprechende Wert aus der vorhandenen Peiltabelle errechnet wird. Dies ist insbesondere dann vorteilhaft, wenn die Peiltabelle in Form einer mathematischen Formel vorliegt. Dadurch kann eine Vergleichbarkeit von Peiltabellen in Form einer mathematischen Formel mit Peiltabellen in Tabellenform erreicht werden.

In einer vorteilhaften Ausgestaltung ist vorgesehen, dass als Messwert eine auf einen Anfangs- und/oder einen Endpegelstand einer im Tank vorhandenen Menge eines Fluids bezogene Volumenänderung verwendet wird. Die Erfassung des Pegelstands kann beispielsweise mittels eines Schwimmers, der aufgrund einer Auftriebswirkung auf einer Oberfläche des Fluids schwimmt, erfolgen. Eine weitere Möglichkeit der Erfassung des Pegelstands bietet ein Sichtfenster in der Tankwand, ein parallel zur vertikalen Höhe des Tanks sich erstreckendes und mit dem Tank fluidtechnisch verbundenes im Wesentlichen transparentes Rohr oder dergleichen.

Diese Ausgestaltung ermöglicht es, die Peiltabelle direkt anzupassen. Der Messwert umfasst dazu den Anfangspegelstand sowie den Endpegelstand und eine dem Tank entnommene beziehungsweise hinzugefügte Menge an Fluid. Die Fluidmenge kann mittels geeigneter Messvorrichtungen hochgenau gemessen werden. Die Pegelstände lassen sich mittels des Pegels des Tanks ermitteln. Die auf diese Weise ermittelten Messwerte können in die anzupassende Peiltabelle direkt übernommen werden. Diese Ausgestaltung ermöglicht es somit, die Peiltabelle nicht nur punktuell anzupassen, sondern durch fortgesetzte Fortführung beziehungsweise Wiederholung des Schritts des Anpassens iterativ immer genauer zu machen. Die Genauigkeit kann durch die Anzahl der Messwerte ständig weiter verbessert werden. Darüber hinaus erlaubt die fortgesetzte Durchführung dieses Verfahrens, dass die Peiltabelle an Veränderungen des Tanks angepasst werden kann. So kann erreicht werden, dass die Peiltabelle zu jeder Zeit eine hochgenaue Zuordnung des gemessenen Pegelstands zu der Menge des im Tank vorhandenen Fluids ermöglicht.

Um die Genauigkeit weiter zu verbessern, kann vorgesehen sein, dass für das Ermitteln des Pegelstands Ausgleichsvorgänge des im Tank vorhandenen Fluids berücksichtigt werden. Je nach Art des Fluids und Abmessungen des Tanks können beispielsweise Zeiträume vorgesehen sein, nach deren Ablauf erst der Endpegelstand erfasst wird.

Eine Weiterbildung sieht vor, dass dem Messwert eine Gewichtung und/oder eine Verfallszeit zugeordnet wird. Hierdurch kann erreicht werden, dass Messwerte in einem häufig genutzten Bereich der Peiltabelle eine stärkere Berücksichtigung bei dem Schritt der Anpassung oder auch der Auswahl erhalten, als Messwerte, die in Bereichen der Peiltabelle liegen, die selten oder gar nicht benutzt werden. Darüber hinaus kann dem Messwert eine Verfallszeit zugeordnet werden, so dass gewährleistet ist, dass möglichst immer neue Messwerte zum Anpassen der Peiltabelle verwendet werden. Es kann beispielsweise vorgesehen sein, dass ein Messwert eine zeitabhängige Gewichtung erhält, die mit zunehmendem Alter abnimmt, und bei Erreichen der Verfallszeit zu Null wird. Ein Messwert, der die Verfallszeit erreicht, findet aufgrund seiner Gewichtung von Null keine Berücksichtigung mehr bei der Anpassung der Peiltabelle.

Die nach dem Verfahren der Erfindung erstellte, angepasste Peiltabelle kann als weitere vorhandene Peiltabelle insbesondere in der Bibliothek der vorhandenen Peiltabellen gespeichert werden. Sie kann der Bibliothek von Peiltabellen hinzugefügt werden, so dass sie auch für weitere Erstellungen von Peiltabellen für andere Tanks, Tanks mit anderer Einbaulage oder dergleichen zur Verfügung stehen. Hierdurch kann das Verfahren zum Erstellen der Peiltabelle weiter beschleunigt werden und hinsichtlich seiner Genauigkeit weiter verbessert werden.

Besonders vorteilhaft wird die angepasste Peiltabelle an eine Zentrale übermittelt. Die Zentrale kann dazu vorgesehen sein, die Bibliothek von vorhandenen Peiltabellen abrufbar bereitzuhalten. So ist es möglich, dass die Vielzahl von Peiltabellen zentral gesammelt werden kann und für weitere Tankinstallationen zum Erstellen der jeweiligen Peiltabelle abrufbar bereitgehalten werden kann. Dadurch dass die angepasste Peiltabelle als vorhandene Peiltabelle zusätzlich gespeichert wird, kann ein Pflegen der Bibliothek von vorhandenen Peiltabellen erreicht werden, so dass nicht nur die Auswahl an Peiltabellen verbessert werden kann, sondern auch die Qualität der verfügbaren Peiltabellen für unterschiedliche Tanks und deren Aufstellungsbedingungen.

Die Vielzahl von vorhandenen Peiltabellen kann durch die Zentrale bereitgestellt werden. Vorzugsweise ist das Bereitstellen über Fernkommunikationsmittel möglich, so dass an beliebigen Orten auf die Vielzahl der vorhandenen Peiltabellen zugegriffen werden kann, um das Verfahren zum Erstellen der Peiltabelle weiter zu optimieren.

Der Schritt des Anpassens der ausgewählten Peiltabelle an den Tank kann eine statistische Auswertung des wenigstens einen Messwerts umfassen. Die statistische Auswertung kann beispielsweise eine Regression umfassen, insbesondere eine lineare Regression, eines Spline-Regression oder dergleichen. Die Art der Regression kann durch einen Nutzer vorgegeben sein. Sie kann aber auch durch eine automatische Auswahl vorgegeben sein. Die Regression ermöglicht es, eine Zuordnung auch für Bereiche der Peiltabelle zu ermöglichen, für die keine Messwerte vorliegen. Dies kann zum Beispiel mittels eines Medians oder einer sonst geeigneten Methode zur Mittelwertbildung erreicht werden. Darüber hinaus kann vorgesehen sein, dass der Messwert mit Methoden der Fehlerbehandlung behandelt wird, bevor er für das Anpassen der Peiltabelle herangezogen wird. Dies ermöglicht es, Fehlanpassungen der ausgewählten Peiltabelle aufgrund von beispielsweise Messfehlern oder dergleichen zu reduzieren oder sogar vollständig zu vermeiden. Besonders vorteilhaft erweist sich das statistische Auswerten in Verbindung mit einer Vielzahl von Messwerten.

Besonders vorteilhaft wird eine Temperatur des Tanks und/oder des im Tank vorhandenen Fluids berücksichtigt. Dies erlaubt es, Änderungen der Temperatur und dadurch volumenausdehnungsbedingte Änderungen des Tanks selbst sowie auch des Fluids zu berücksichtigen. Weiterhin ermöglicht diese Ausgestaltung, zu berücksichtigen, dass bei einer Zuführung von Fluid in den Tank unterschiedliche Temperaturen des im Fluid angeordneten Tanks sowie des zugeführten Fluids zu einem abweichenden Pegelstand führen können. Vorzugsweise wird deshalb nicht nur die Temperatur des Fluids im Tank sondern auch die Temperatur von zugeführtem Fluid erfasst. Darüber hinaus kann vorgesehen sein, dass die Temperatur an unterschiedlichen Stellen im Tank ermittelt wird, um beispielsweise Temperaturgradienten oder dergleichen insbesondere im Fluid ermitteln und berücksichtigen zu können. Hierdurch kann das Anpassen der Peiltabelle weiter verbessert werden.

Es kann vorgesehen sein, dass das Verfahren kontinuierlich, zeitdiskret und/oder bei einem vorgebbaren Ereignis wiederholt wird. So kann vorgesehen sein, dass das Verfahren zu bestimmten Zeitpunkten, beispielsweise wöchentlich, monatlich oder jährlich, oder auch bei einem vorgebbaren Ereignis wie einer Fluidzufuhr, einer Tankreinigung oder dergleichen wiederholt wird. Hierdurch kann eine Aktualisierung der Peiltabelle erreicht werden, so dass immer eine hochgenaue Peiltabelle zur Verfügung steht.

Darüber hinaus enthalten Peiltabellen oftmals lediglich diskrete Zuordnungen von Pegelständen zu Mengen des vorhandenen Fluids im Tank, so dass Zwischenstände in der Regel nur durch eine Interpolation ermittelbar sind. Da bei vielen Tanks zwischen Pegelstand und Menge des im Tank vorhandenen Fluids eine Nichtlinearität in der Zuordnung von Pegelstand zu im Tank vorhandenen Fluid besteht, kann die Interpolation teilweise zu gravierenden Abweichungen von der tatsächlichen Menge des im Tank vorhandenen Fluids führen. Auch hier kann die Erfindung Abhilfe schaffen, indem die Peiltabelle mit hinreichend feiner Auflösung oder als mathematische Formel erstellt wird.

Grundsätzlich lässt sich das Verfahren der Erfindung auch durchführen, wenn als ausgewählte Peiltabelle lediglich eine leere Tabelle, das heißt, keine Tabelle, zur Verfügung steht. In diesem Fall ist es jedoch vorteilhaft, wenn die Anpassung möglichst viele gemessene Werte des Tanks verwendet. Das Verfahren benötigt dann aber mehr Zeit, bis eine genaue Peiltabelle erstellt werden kann. Diese kann auch lückenhaft sein, wenn in einem Bereich der Peiltabelle keine Messwerte verfügbar sind. Die Lücken können mittels Regression, Spline-Interpolation, Extrapolation oder dergleichen insbesondere vorläufig geschlossen werden, damit eine Peiltabelle für möglichst alle möglichen Pegelstände erreicht werden kann. Es kann vorgesehen sein, dass interpolierte Bereiche der Peiltabelle durch Messwerte ersetzt werden, sobald geeignete Messwerte verfügbar sind.

Mit der Erfindung wird ferner ein Verfahren zum Ermitteln einer Menge eines in einem Tank vorhandenen Fluids vorgeschlagen, wobei mittels einer Pegelerfassungseinheit ein Pegelstand des im Tank vorhandenen Fluids erfasst und mittels einer Peiltabelle dem Pegelstand ein Wert für die Menge des im Tank vorhandenen Fluids zugeordnet wird, wobei eine gemäß dem erfindungsgemäßen Verfahren erstellte Peiltabelle verwendet wird. Hierdurch kann nicht nur eine hochgenaue Ermittlung der Menge des im Tank vorhandenen Fluids erreicht werden, sondern es ist auch möglich, nachzuhalten, ob Fluid in unerwünschter Weise aus dem Tank entweicht beziehungsweise in unerwünschter Weise Fremdstoffe in den Tank eingeführt werden. So lassen sich beispielsweise Leckagen sowie auch unberechtigte Entnahmen Dritter erfassen. Dadurch kann ein Betrieb des Tanks mit hoher Zuverlässigkeit und Sicherheit erreicht werden. Das erfindungsgemäße Verfahren erlaubt es dabei, nachträglich auftretende Änderungen der Tankeigenschaften zu berücksichtigen, so dass die Genauigkeit der Peiltabelle im Wesentlichen während der Betriebsdauer des Tanks erhalten bleiben kann. Mit dem erfindungsgemäßen Verfahren ist es darüber hinaus möglich, die Genauigkeit der Ermittlung der Menge des im Tank vorhandenen Fluids, insbesondere in kritischen Bereichen, wie beispielweise dem voll gefüllten Zustand des Tanks beziehungsweise dem voll entleerten Zustand des Tanks, zu verbessern. Gerade in diesen Bereichen ist oftmals eine hohe Genauigkeit gewünscht, um gegebenenfalls Schutzmaßnahmen, wie oben beschrieben, einleiten zu können. Hier bietet das Verfahren der Erfindung eine Lösung.

Es wird ferner vorgeschlagen, dass die Peiltabelle erneut angepasst wird, wenn eine Differenz zwischen einem Messwert einer auf einen Anfangs- und/oder einen Endpegelstand des im Tank vorhandenen fluidbezogenen Volumenänderung und einer aus der Peiltabelle ermittelten, auf den Anfangs- und/oder Endpegelstand bezogenen Volumenänderung einen vorgegebenen Vergleichswert überschreitet. So kann vorgesehen sein, dass bei einer Abweichung von 1%, insbesondere 3% oder auch vorzugsweise 5% die Durchführung des Verfahrens zum Erstellen der Peiltabelle automatisch ausgelöst wird. Vorzugsweise ist die Differenz individuell einstellbar, so dass in Abhängigkeit von Tankgröße oder auch Anwendungsfall die Durchführung des Verfahrens anhand individueller Einstellungen ausgelöst werden kann. Hierdurch ist es möglich, die Verfahrensdurchführung insgesamt zu individualisieren und zugleich eine automatische Durchführung des Verfahrens zu ermöglichen.

Weitere Vorteile und Merkmale sind der folgenden Beschreibung eines Ausführungsbeispiels zu entnehmen. Im Wesentlichen gleichbleibende Bauteile und Verfahrensschritte sind mit den gleichen Bezugszeichen bezeichnet. Die Zeichnungen sind Schemazeichnungen und dienen lediglich der Erläuterung des folgenden Ausführungsbeispiels.

Es zeigen:
- Fig. 1: schematisch eine Schnittdarstellung durch einen Tank, für den mittels des Verfahrens der Erfindung eine Peiltabelle erstellt werden soll,
- Fig. 2: einen Ausschnitt aus einer Herstellerpeiltabelle in einer tabellarischen Aufstellung bezüglich eines bekannten Tanks in einer vorgegebenen Einbaulage,
- Fig. 3: schematisch eine grafische Darstellung von Herstellerpeiltabellen bezüglich mehrerer bekannter Tanks,
- Fig. 4: schematisch ein Diagramm mit einem Graphen, der den Verlauf des Pegelstands über der Zeit beim bestimmungsgemäßen Betrieb des Tanks gemäß Fig. 1 darstellt,
- Fig. 5: ein schematisches Diagramm zur Darstellung der Erzeugung von Datensätzen,
- Fig. 6: schematisch ein Diagramm bezüglich der Durchführung einer statistischen Analyse bezüglich der Datensätze des Tanks gemäß Fig. 1,
- Fig. 7: schematisch eine grafische Darstellung einer Korrelation der aus der statistischen Analyse gewonnenen Daten gegenüber bekannten Tanks gemäß Fig. 3,
- Fig. 8: schematisch eine grafische Darstellung der statistisch ausgewerteten Messwerte gegenüber einem ausgewählten bekannten Tank und
- Fig. 9: schematisch die gemäß dem erfindungsgemäßen Verfahren erstellte neue Peiltabelle in einer schematischen grafischen Darstellung gegenüber der Peiltabelle des ausgewählten bekannten Tanks.

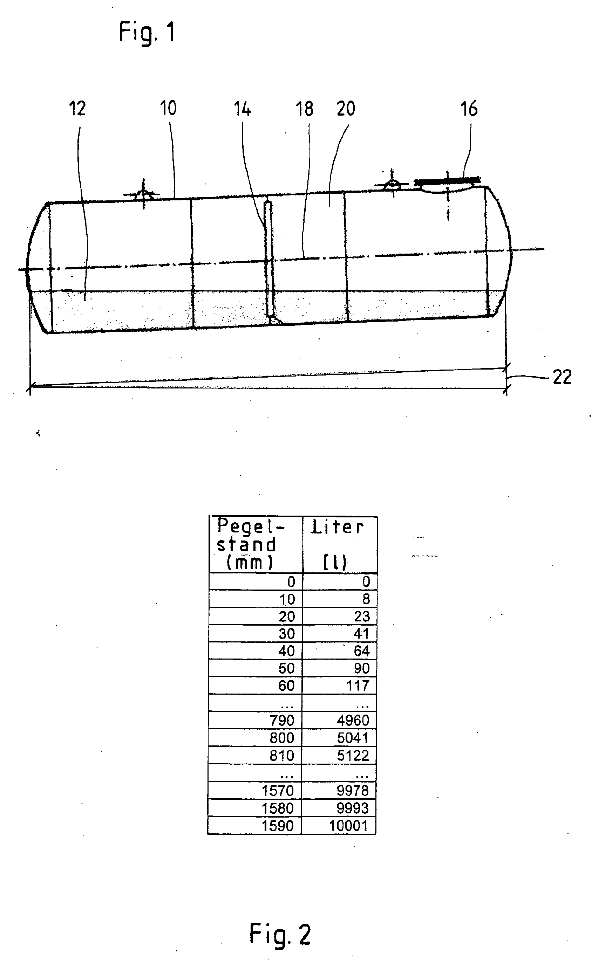

Fig. 1 zeigt in schematischer Schnittdarstellung einen Tank 10, wie er als Unterbodentank bei Tankstellen zum Speichern von Treibstoffen wie Benzin, Diesel oder dergleichen zum Einsatz kommt. Der Tank 10 weist einen im Wesentlichen kreiszylindrischen Hohlkörper auf, der an seinen Enden mit sphärischen Kappen fluiddicht verschlossen ist. Innerhalb des Tanks 10 ist eine Strebe 14 angeordnet, die zur Versteifung des Tanks 10 dient.

Ferner weist der Tank 10 im Bereich des in Fig. 1 dargestellten rechten Endes eine Revisionsöffnung 16 auf. Diese ist mittels eines nicht bezeichneten Deckels verschlössen. Vorliegend ist der Tank 10 mit Benzin 12 als Fluid befüllt, dessen Menge etwa einen Pegelstand von 25% des maximal möglichen Pegels entspricht. Der Tank 10 weist eine zentrische Längsachse 18 auf, die in Einbaulage des Tanks 10 zu einer nicht dargestellten Horizontalen eine Abweichung in einem Winkel 22 von vorliegend etwa 3° aufweist.

Nicht dargestellt ist in Fig. 1 ein am Tank 10 angeordneter Pegel mit einer Pegelerfassungseinheit, die den Pegelstand des Benzins 12 im Tank 10 erfasst. Die Pegelerfassungseinheit umfasst einen Schwimmer sowie einen Signalgeber, der ein Signal entsprechend des mittels des Schwimmers erfassten Pegelstands im Tank 10 an eine ebenfalls nicht dargestellte Steuerung übermittelt. Weiterhin nicht dargestellt ist eine Anschlussleitung, über die dem Tank 10 Benzin 12 sowohl zugeführt als auch entnommen werden kann. Mittels der Pegelerfassungseinheit wird der Pegelstand des Benzins 12 im Tank 10 kontinuierlich erfasst.

Die Anschlussleitung weist ferner einen ebenfalls nicht dargestellten Durchflussmesser auf, mittels dem ein Volumenstrom des Benzins 12 in den Tank 10 beziehungsweise aus dem Tank 10 erfasst werden kann. Der Durchflussmesser ist ebenfalls an der Steuerung angeschlossen und liefert an diese ein einem Volumenstrom des durch die Anschlussleitung strömenden Benzins 12 entsprechendes Signal. Mittels des Durchflussmessers ist es der Steuerung möglich, ein dem Tank 10 zugeführtes beziehungsweise entnommenes Volumen von Benzin 12 in Bezug auf einen Pegelstand zu erfassen.

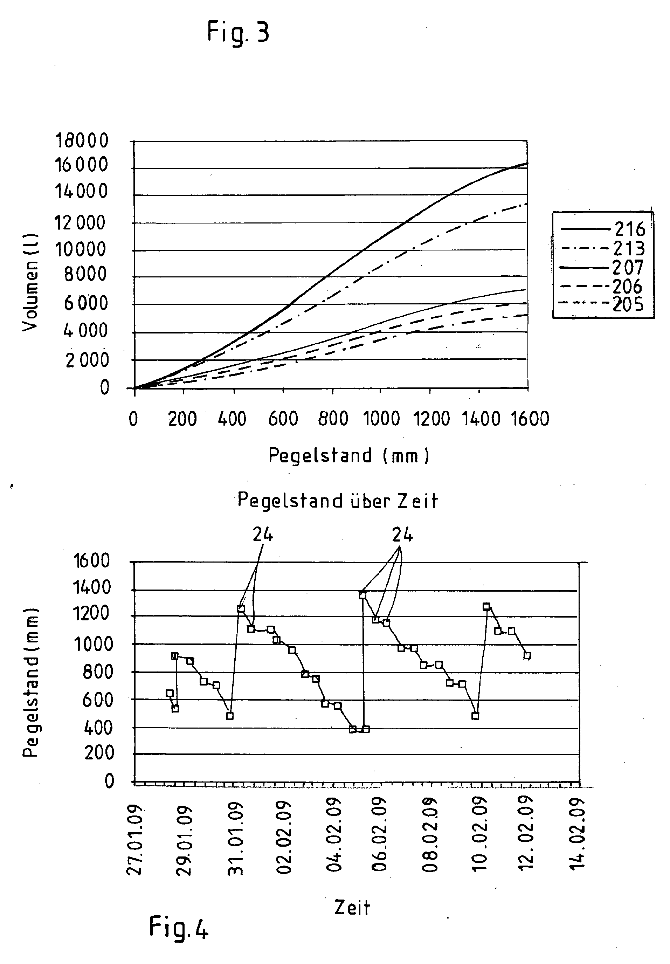

Fig. 2 zeigt ausschnittsweise eine Peiltabelle als vorhandene Peiltabelle des Pegelstands des in einem bekannten Tank angeordneten Benzins zu einer Menge des im Tank vorhandenen Benzins 12. Weitere vorhandene Peiltabellen in grafischer Darstellung sind als Herstellerreferenztabellen in der Fig. 3 dargestellt. Diese Peiltabellen stehen der Steuerung für die Durchführung des Verfahrens in Form einer Bibliothek von vorhandenen Peiltabellen zur Verfügung.

Fig. 4 zeigt schematisch in einem Pegelstand-Zeit-Diagramm einen Graphen, der den Verlauf des Pegelstands des Tanks 10 über der Zeit darstellt. Deutlich zu erkennen sind abfallende Bereiche, die sich über einen größeren Zeitraum erstrecken. Die abfallenden Bereiche entsprechen Entnahmen von Benzin 12 aus dem Tank 10. In den abfallenden Bereichen sind einzelne Punkte 24 zu erkennen, die jeweils einzelnen Tankvorgängen von Kraftfahrzeugen an der Tankstelle zugeordnet werden können. Bei jedem Tankvorgang nimmt der Pegelstand des Tanks 10 entsprechend ab. Darüber hinaus sind kurzzeitige, steil ansteigende Bereiche des Graphen zu erkennen, in denen der Pegelstand deutlich ansteigt. Die ansteigenden Bereiche entsprechende Zuführungen von Benzin 12 in den Tank 10. Dies sind Zeitpunkte, zu denen der Tank 10 mittels eines Tankfahrzeugs befüllt wird, indem Benzin 12 zugeführt wird. Sowohl die Zufuhr als auch die Entnahme von Benzin 12 kann durch den Durchflussmesser in der Anschlussleitung erfasst und an die Steuerung übermittelt werden. Zugleich erfasst die Pegelerfassungseinheit die Pegelstände des Benzins 12 im Tank 10 und übermittelt diese ebenfalls an die Steuerung.

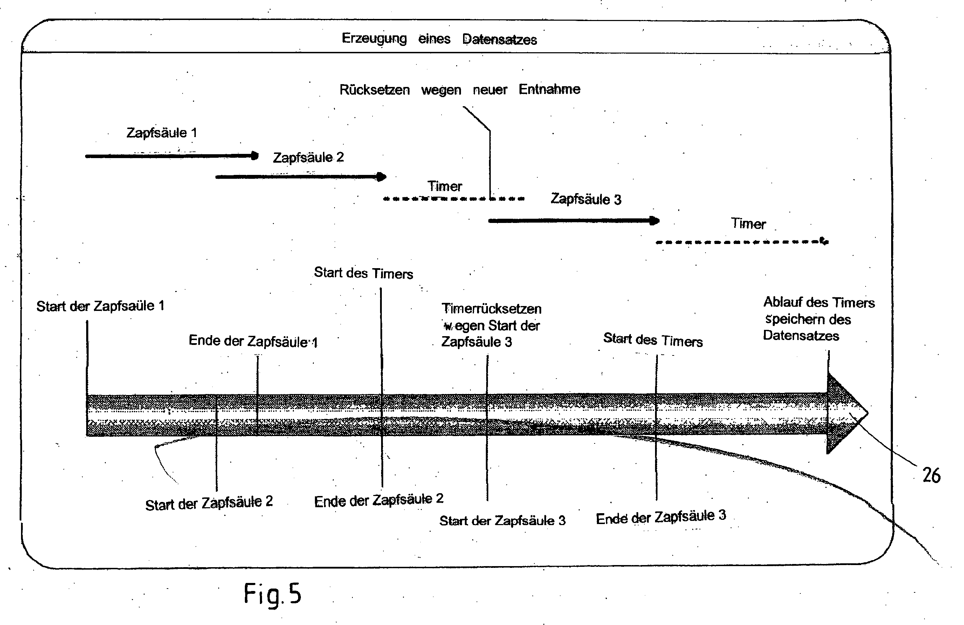

Fig. 5 zeigt in einer grafischen Darstellung die Erzeugung eines Datensatzes anhand von Messwerten des Anfangs- und Endpegelstands sowie des dem Tank 10 zugeführten beziehungsweise entnommenen Volumens des Benzins 12. Im unteren Bereich des Diagramms ist ein breiter Balken 26 als Zeitstrahl dargestellt. In der oberen Hälfte des Diagramms sind einzelne Tankvorgänge von Fahrzeugen an der Tankstelle dargestellt. Vorliegend hat die Tankstelle drei Zapfsäulen 1 bis 3, über die aus dem Tank 10 Benzin 12 zum Zwecke der Betankung der Fahrzeuge entnommen werden kann. Aus dem oberen Bereich ist erkennbar, dass sich zwei Tankvorgänge von Fahrzeugen der Zapfsäulen 1 und 2 zeitlich überlappen. Am Ende des Tankvorgangs der Zapfsäule 2 wird ein nicht näher bezeichneter Timer gestartet. Vor Ablauf einer durch den Timer vorgegebenen Zeit beginnt ein Tankvorgang mit der Zapfsäule 3. Dies führt dazu, dass der Timer zurückgesetzt wird. Am Ende des Tankvorgangs der Zapfsäule 3 wird der Timer erneut gestartet und die durch den Timer vorgegebene Zeit läuft ab. Nach Ablauf des Timers wird der aktuelle Pegelstand des Benzins 12 im Tank 10 erfasst. Die Zeit des Timers ist so eingestellt, dass Ausgleichsvorgänge des Benzins 12 im Tank 10 im Wesentlichen abgeklungen sind, so dass der Pegelstand mittels der Pegelerfassungseinheit genau erfasst werden kann. Vorliegend ist hierfür eine Zeit von etwa 1,5 min vorgesehen. Natürlich kann die Zeit je nach Tank und Eigenschaften des im Tank angeordneten Fluids auch anders gewählt werden. Im Falle einer stark frequentierten Tankstelle, bei der der Timer über eine längere Zeit nicht vollständig abläuft, kann eine Messwerterfassung hilfsweise auch zu vorgebbaren festen Zeitpunkten erfolgen. Diese Messwerte können mit einer Kennzeichnung versehen werden. Ferner besteht die Möglichkeit, die Messwerte mit einer speziellen Gewichtung zu versehen, um ihre Ungenauigkeit für die Durchführung des erfindungsgemäßen Verfahrens zu berücksichtigen.

Der Timer wird somit immer dann gestartet, wenn eine Fluidentnahme, vorliegend eine Benzinentnahme oder auch eine Fluidzufuhr beziehungsweise hier Benzinzufuhr, beendet wird. Dieser Zeitpunkt kann anhand des Signals des Durchflussmessers ermittelt werden. Erfolgt eine erneute Entnahme beziehungsweise Zufuhr von Benzin wird der Timer zurückgesetzt und gesperrt, bis die Entnahme beziehungsweise Zufuhr von Benzin 12 abgeschlossen ist. Der Timer wird dann automatisch erneut gestartet und, sofern keine erneute Rücksetzung erfolgt. Erst nach Ablauf des Timers wird der aktuelle Pegelstand erfasst.

Mit Erfassung eines neuen Pegelstandes des Benzins 12 im Tank 10 wird zugleich auch anhand des ausgewerteten Messsignals des Strömungsmessers das entnommene beziehungsweise zugeführte Volumen des Benzins 12 ermittelt.

Ein zuvor bereits ermittelter Pegelstand sowie der neu ermittelte Pegelstand bilden jeweils den Anfangs- und den Endpegelstand bezüglich der Entnahme beziehungsweise Zufuhr von Benzin 12. Zusammen mit dem ermittelten Volumen wird aus diesen Daten ein Datensatz gebildet. Dieser wird von der Steuerung für die weitere Auswertung gespeichert.

Zur statistischen Auswertung ermittelt die Steuerung aus dem Anfangs- und zugehörigen Endpegelständen sogenannte Verknüpfungspegelstände durch Mittelwertbildung. Diesen wird das zugehörige beziehungsweise zugeordnete Volumen des entsprechenden Anfangs- und Endpegelstand zugeordnet. Die hierdurch gewonnenen Daten werden bestimmten, vorgebbaren Pegelbereichen zugeordnet, beziehungsweise klassifiziert. Vorliegend ist eine äquidistante Klassifizierung vorgesehen. Natürlich kann auch eine abweichende Klassifizierung vorgesehen sein, wenn beispielsweise Bereiche unterschiedlicher Messgenauigkeit oder dergleichen erforderlich sind.

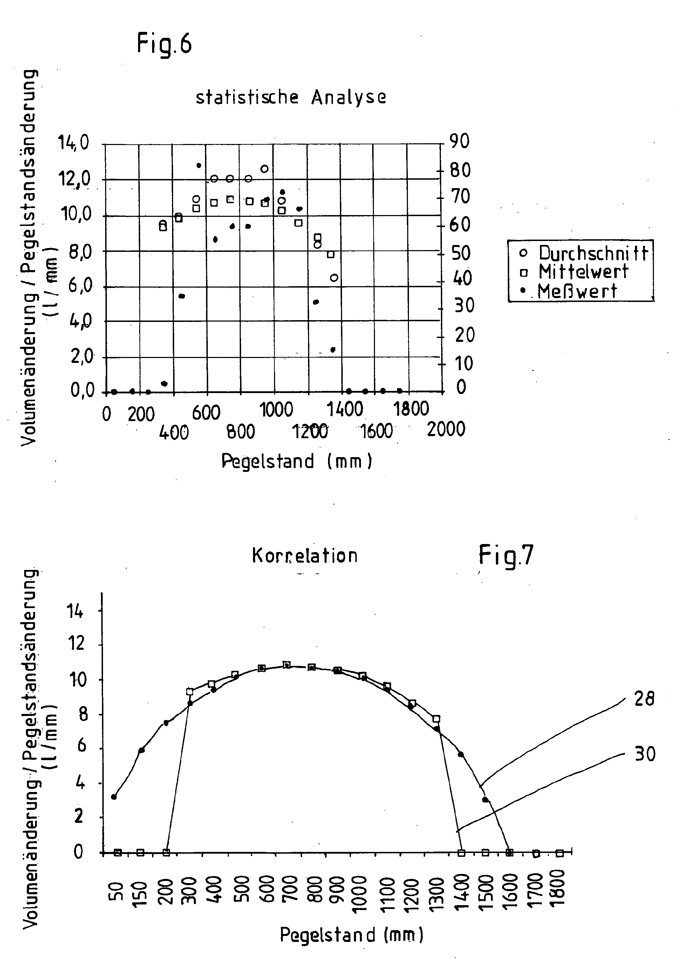

Für jede Klasse wird eine vorliegend lineare Regression durchgeführt, die für diese Klasse eine Änderung des Tankfüllstands in Abhängigkeit einer Pegelstandänderung darstellt. Diese wird für alle Klassen durchgeführt, so dass letztendlich die gewonnenen Daten in einem Diagramm, wie es in Fig. 6 dargestellt ist, aufgetragen werden können. Zu erkennen sind die aufgrund von unterschiedlichen Gewichtungen unterschiedlichen Verläufe. Für die weitere Verfahrensdurchführung wird auf die durch ein Quadrat dargestellten Mittelwerte abgestellt. Vorliegend dient die grafische Darstellung nur der Erläuterung. Tatsächlich sind die Werte in einem Speicher der Steuerung abrufbar gespeichert. Für die weitere Verfahrensdurchführung wird auf die in Fig. 6 mittels eines Quadrats dargestellten und über eine Median-Funktion erzeugten Mittelwerte abgestellt.

Anhand dieser Mittelwerte, die vorliegend den Messwert für das Auswahlkriterium bilden, wird mittels der Steuerung aus der Bibliothek der vorhandenen Peiltabellen diejenige ausgewählt, mit der die größte Übereinstimmung mit den ermittelten Mittelwerten herstellbar ist. Dies wird mit der Steuerung anhand einer mathematischen Korrelation ermittelt.

Fig. 7 zeigt schematisch eine Darstellung der einzelnen Mittelwerte sowie eine vorhandene Peiltabelle mit der Bezeichnung 213 (vgl. auch Fig. 3). Der entsprechende Graph der Peiltabelle 213 ist durch den Graph 28 dargestellt. Die entsprechende Kurve der Messwerte ist durch den Graphen 30 gebildet. Zu erkennen ist, dass im Bereich des Pegelstands von 250mm bis 1250mm eine sehr gute Übereinstimmung in den beiden Graphen besteht. Die Abweichungen in den Randbereichen ergeben sich dadurch, dass in diesen Bereichen keine Messpunkte ermittelt werden konnten. Vorliegend wird durch die Steuerung somit automatisch die vorhandene Peiltabelle 213 für das weitere Verfahren ausgewählt.

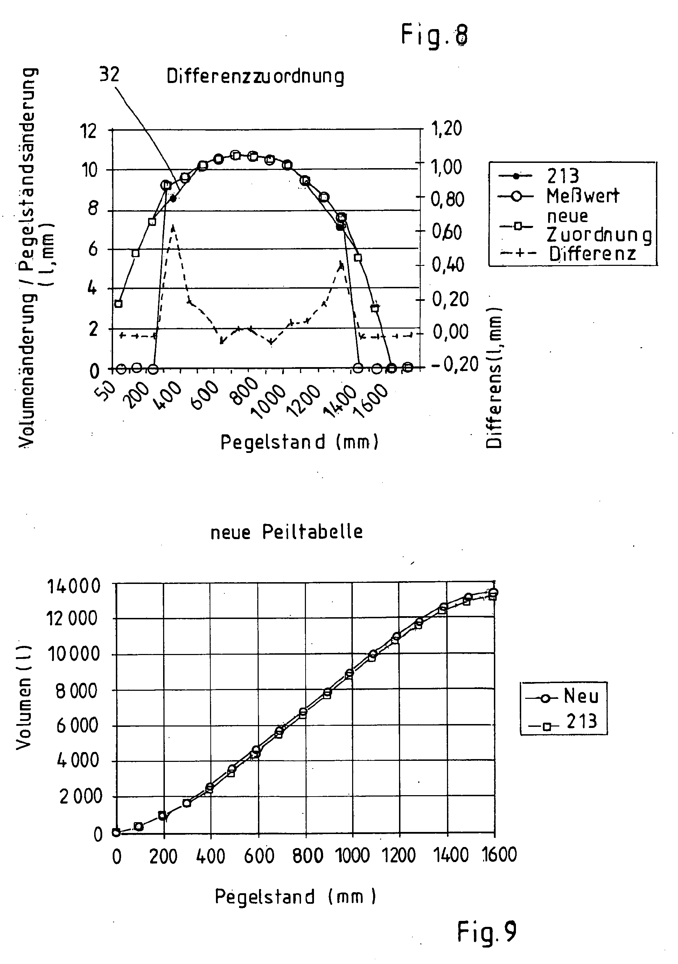

Der Schritt des Anpassens der ausgewählten Peiltabelle umfasst in dieser Ausgestaltung eine weitere Verknüpfung der Datensätze der beiden Graphen 28, 30. Daraus ergibt sich die angepasste Differenz-Peiltabelle, die in Fig. 8 durch den Graphen 32 dargestellt ist. Zu erkennen ist, dass die Lücken der Messdaten anhand der ausgewählten vorhandenen Peiltabelle 213 ergänzt wurden. Bezüglich der übrigen Werte werden aus den Messwerten anhand der Peiltabelle 213 und den zugehörigen statistisch ausgewerteten Messwerten mittels Mittelwertbildung neue Werte ermittelt, die zusammen mit den Werten der Lücken die angepasste Differenz-Peiltabelle bilden. Die neue Differenz-Peiltabelle bildet nun die Grundlage für die angepasste Peiltabelle, die zukünftig der Ermittlung des Tankfüllstands aus dem Pegelstand zugrundegelegt werden soll. Diese ist in Fig. 9 dargestellt und wird vorliegend durch mathematische Integration der Differenz-Peiltabelle gemäß Fig. 8 ermittelt. Zu erkennen ist, dass im Bereich großer Pegelstände eine Abweichung gegenüber der Peiltabelle des Standardtanks 213 vorliegt. Dies ist dadurch begründet, dass der Tank 10 mit seiner Längsachse nicht im Wesentlichen horizontal, sondern stattdessen leicht geneigt angeordnet ist.

Ergeben sich über einen größeren Zeitraum, beispielsweise einem Monat, einem Quartal oder einem Jahr, Abweichungen, die 1 % überscheiten, so wird das Verfahren zur Erstellung der Peiltabelle erneut durchgeführt. Hierdurch kann die Peiltabelle ständig aktualisiert gehalten werden.

Das erfindungsgemäße Verfahren erlaubt es somit, die Peiltabelle beziehungsweise Peiltabelle möglichst genau an die tatsächlichen Bedingungen des Tanks 10 anzupassen, so dass eine hochgenaue Zuordnung des Pegelstands zur Menge des im Tank 10 vorhandenen Benzins 12 erreicht werden kann. Natürlich kann bei der Erstellung der Peiltabelle auch die Temperatur des Fluids beziehungsweise des Benzins 12 berücksichtigt werden, so dass hierdurch versursachte Fehler weitgehend vermieden werden können. Die Zuordnung gemäß Fig. 9 ist dabei so genau, dass sie es erlaubt, eventuell auftretende Leckagen oder auch widerrechtliche Entnahme von Benzin 12 aus dem Tank 10 zuverlässig bereits bei kleinen Mengen zuverlässig erkennen zu können.

Das in den Figuren dargestellte Ausführungsbeispiel dient lediglich der Erläuterung der Erfindung und ist für diese nicht beschränkend.

### Bezugszeichenliste

- 10: Tank
- 12: Benzin
- 14: Strebe
- 16: Revisionsöffnung
- 18: Längsachse
- 20: Hohlraum
- 22: Winkel
- 24: Messpunkt
- 26: Balken
- 28: Graph
- 30: Graph
- 32: Graph

## Patentansprüche

1. Verfahren zum Erstellen einer Peiltabelle für einen Tank, insbesondere einen Treibstofftank mit folgenden Schritten:
Auswählen einer Peiltabelle aus einer Vielzahl von vorhandenen Peiltabellen auf Basis eines vorgebbaren Auswahlkriteriums,
Anpassen der ausgewählten Peiltabelle an den Tank, wobei ein Wert der Peiltabelle durch einen gemessenen Wert des Tanks ersetzt wird.

2. Verfahren nach Anspruch 1, **dadurch gekennzeichnet, dass** als Auswahlkriterium die geringste Abweichung eines Messwerts einer physikalischen Größe des Tanks von einem entsprechenden Wert der vorhandenen Peiltabellen dient.

3. Verfahren nach Anspruch 2, **dadurch gekennzeichnet, dass** der dem Messwert entsprechende Wert aus der vorhandenen Peiltabelle errechnet wird.

4. Verfahren nach Anspruch 2 oder 3, **dadurch gekennzeichnet, dass** als Messwert eine auf einen Anfangs- und/oder einen Endpegelstand einer im Tank vorhandenen Menge eines Fluids bezogene Volumenänderung verwendet wird.

5. Verfahren nach Anspruch 4, **dadurch gekennzeichnet, dass** für das Ermitteln des Pegelstands Ausgleichsvorgänge des im Tank vorhandenen Fluids berücksichtigt werden.

6. Verfahren nach einem der Ansprüche 2 bis 5, **dadurch gekennzeichnet, dass** dem Messwert eine Gewichtung und/oder eine Verfallszeit zugeordnet wird.

7. Verfahren nach einem der Ansprüche 1 bis 6, **dadurch gekennzeichnet, dass** die angepasste Peiltabelle als vorhandene Peiltabelle gespeichert wird.

8. Verfahren nach einem der Ansprüche 1 bis 7, **dadurch gekennzeichnet, dass** die angepasste Peiltabelle an eine Zentrale übermittelt wird.

9. Verfahren nach einem der Ansprüche 1 bis 8, **dadurch gekennzeichnet, dass** die Vielzahl von vorhandenen Peiltabellen durch die Zentrale bereitgestellt wird.

10. Verfahren nach einem der Ansprüche 1 bis 9, **dadurch gekennzeichnet, dass** der Schritt des Anpassens der ausgewählten Peiltabelle an den Tank eine statistische Auswertung des wenigstens einen Messwerts umfaßt.

11. Verfahren nach einem der Ansprüche 1 bis 10, **dadurch gekennzeichnet, dass** der Schritt des Ersetzens des Wertes der Peiltabelle ein Umrechnen des gemessenen Werts umfaßt.

12. Verfahren nach einem der Ansprüche 1 bis 11, **dadurch gekennzeichnet, dass** eine Temperatur des Tanks und/oder des in Tank vorhandenen Fluids berücksichtigt wird.

13. Verfahren nach einem der Ansprüche 1 bis 12, **dadurch gekennzeichnet, dass** das Verfahren kontinuierlich, zeitdiskret und/oder bei einem vorgebbaren Ereignis wiederholt wird.

14. Verfahren zum Ermitteln einer Menge eines in einem Tank vorhandenen Fluids, wobei mittels einer Pegelerfassungseinheit ein Pegelstand des im Tank vorhandenen Fluids erfasst und mittels einer Peiltabelle dem Pegelstand ein Wert für die Menge des im Tank vorhandenen Fluids zugeordnet wird, wobei eine Peiltabelle nach einem der vorhergehenden Ansprüche verwendet wird.

15. Verfahren nach Anspruch 14, **dadurch gekennzeichnet, dass** die Peiltabelle erneut angepasst wird, wenn eine Differenz zwischen einem Messwert einer auf einen Anfangs- und/oder einen Endpegelstand des im Tank vorhandenen Fluids bezogenen Volumenänderung und einer aus der Peiltabelle ermittelten, auf den Anfangs- und/oder den Endpegelstand bezogenen Volumenänderung einen vorgebbaren Vergleichswert überschreitet.
